# NEUE EUROPÄISCHE PATENTSCHRIFT

(11) **EP 1 812 264 B2**
(45) Veröffentlichungstag und Bekanntmachung des Hinweises auf die Entscheidung über den Einspruch: **17.08.2022**
(45) Hinweis auf die Patenterteilung: 08.06.2016
(21) Anmeldenummer: 05806451.0
(22) Anmeldetag: 04.11.2005
(51) Int. Cl.: B60R 13/08

(54) **AKUSTIK-VERKLEIDUNGSTEIL FÜR EIN FAHRZEUG**
ACOUSTIC PANNELLING PART FOR A VEHICLE
ELEMENT DE REVETEMENT ACOUSTIQUE POUR UN VEHICULE

(30) Priorität: 06.11.2004 DE 102004053751
(43) Veröffentlichungstag der Anmeldung: 01.08.2007
(73) Patentinhaber: Röchling Automotive SE & Co. KG, 68165 Mannheim (DE)
(72) Erfinder: PFAFFELHUBER, Klaus, 86157 Augsburg (DE); ORTH, Arno, 67580 Hamm (DE); MOOS, Egon, 67433 Neustadt/Weinstrasse (DE); UHL, Frank, 66904 Brücken (DE); HUBER, Ludwig, 77770 Durbach (DE)
(74) Vertreter: Ruttensperger Lachnit Trossin Gomoll
(86) Internationale Anmeldenummer: PCT/EP2005/011820
(87) Internationale Veröffentlichungsnummer: WO 2006/048304

(56) Entgegenhaltungen:
- EP-A- 1 308 271
- EP-A1- 0 531 761
- EP-A2- 0 732 684
- EP-A2- 1 362 744
- EP-B1- 0 666 806
- WO-A-96/16804
- WO-A-99/44816
- WO-A-2005/025858
- DE-A1- 10 311 421
- DE-A1- 19 652 527
- DE-A1- 19 804 567
- DE-A1- 19 904 986
- DE-C1- 4 334 984
- DE-U1- 20 203 808
- FR-A1- 2 387 822
- JP-A- 2001 098 449
- US-A1- 2003 008 581

## Beschreibung

Die Erfindung betrifft ein Verkleidungsteil für ein Fahrzeug nach dem Oberbegriff von Anspruch 1 und insbesondere ein Motorraum- oder Unterboden-Verkleidungsteil für ein Kraftfahrzeug, wovon im folgenden beispielhaft ausgegangen werden soll.

Ein derartiges Verkleidungsteil ist beispielsweise aus der JP 2001 098449 A bekannt.

Es ist bekannt, Unterbodenverkleidungen bzw. Motorraumverkleidungen in einem Pressverfahren mit hohen Werkzeuginnendrücken aus glasfaserverstärkten Kunststoffen zu pressen. Die Glasfaserverstärkung besteht üblicherweise aus gewobenen Matten oder aus Vliesmatten, aber auch aus losen, aber möglichst unorientierten Glasfasern, welche in eine Kunststoffmatrix aus überwiegend Polypropylen eingebracht sind. Die Halbzeuge, die hierfür zur Verfügung stehen, sind in der Regel Platten aus einem glasfaserverstärkten Thermoplast (GMT) oder Stäbchengranulate (LFT: Long Fiber Thermoplast). Die Stäbchengranulate bestehen aus einem Glasfaser-Filamentbündel von ca. 20mm Länge, welches von einem Polypropylen-Mantel umschlossen ist. Vor dem Verpressen werden die Platten in einem Wärmeofen aufgeheizt bzw. die LFT-Granulate in einer Plastifiziereinheit aufgeschmolzen, um danach in das offenen Werkzeug der Presse gelegt zu werden.

Mittlerweile ist es auch üblich, die Glasfaser in einem Direkteinzugsverfahren zusammen mit Kunststoffgranulat in einer Plastifiziereinheit zu verarbeiten (D-LFT), ohne den Zwischenschritt über das LFT-Halbzeug gehen zu müssen. Bei erhöhten Temperaturanforderungen ist es auch üblich, als Kunststoffmatrix einen glasfaserverstärkten duroplastischen Werkstoff aus Polyesterharz zu verwenden, welcher in einem geheizten Werkzeug ausreagiert (SMC: Sheet Moulded Compound)

Die entstehenden Bauteile haben üblicherweise eine Dicke von ca. 1,5-2,5 mm und ein Flächengewicht von ca. 2kg/m². Die derzeit maximal mögliche Bauteilgröße beträgt etwa 1,0 bis 1,5 m², bedingt durch die sehr hohen Preßdrücke von ca. 200-300bar und die damit verbundenen hohen Maschinenkosten für Pressen mit einer Presskraft von mehr als 3000 t.

Neue Produktionsverfahren ermöglichen leichtere und großflächigere Bauteile mit wesentlich geringeren Pressdrücken herzustellen. Hierzu wird als Halbzeug eine Vliesmatte aus Glasfasern und Kunststofffasern wie bspw. Polypropylen oder Polyester erstellt und mit zwei Kunststoff-Deckfolien wie bspw. ebenfalls Polypropylen auf beiden Seiten abgedeckt (LWRT: Low Weight Reinforced Thermoplast). Die Kernschicht dieses Verbunds hat die Eigenschaft beim Erhitzen zu expandieren (loften). Mit diesem auf ca 10mm Gesamtdicke gelofteten Material lässt sich durch geeignete Werkzeuggestaltung der Randbereich kompakt (voll konsolidiert) verpressen, während im restlichen Bereich die Struktur des Vlieskerns mit den Deckfolien beibehalten werden kann. Diese Struktur führt zu sehr eigensteifen Bauteilen mit vergleichsweise geringem Flächengewicht von unter 1,5kg/m². Da in diesem Verfahren die Werkzeugkavität nicht durch eine fliesende Masse ausgeformt werden muss, ergeben sich wesentlich geringere Pressdrücke (ca.10bar) und es ist ohne weiteres möglich, mit Aufspannflächen von 4m² und mehr zu pressen. Nachteilig bei diesem Verfahren ist, dass sich versteifende bzw. für zusätzlich Funktionalität benötigte Strukturen wie Stege, Naca-Öffnungen, Befestigungsdome etc. gar nicht oder nur in eingeschranktem Maße einbringen lassen. Neuere Entwicklungen auf dem Gebiet von LWRT besitzen als Kernschicht einen Schaumstoff und als Deckschicht ein glasfaserverstärktes PP-Vlies. Hierbei ist bei vergleichbarer Steifigkeit eine weitere Gewichtsreduktion möglich.

Weiterhin ist es bekannt, diese Motorraumabschirmungen und Unterbodenverkleidungen auf der dem Motor- bzw. der Abgasanlage zugewandten Seite mit Wärmeabschirmungen und Schallabsorbern zu versehen.

Schallabsorber bestehen in der Regel aus verhautetem PUR-Schaum oder verhautetem Polyestervlies, aber auch aus tiefgezogenen Kammerstrukturen oder mikroperforierten Folien und Platten. Üblicherweise werden derartige Schallabsorptions-Formteile nachträglich auf die Motorraumabschirmung geklebt, geklipst oder geschweißt. Es ist aber auch bekannt, eine komplette Geräuschkapsel, also Träger und Kästchenabsorber im Blasverfahren in einem Fertigungsschritt herzustellen. Hierbei besteht jedoch prozessbedingt eine erhebliche Einschränkung in der Werkstoffauswahl von Träger und Absorber und somit auch in den physikalischen Eigenschaften, insbesondere was die Glasfaserverstärkung dieses Bauteils und damit dessen Eigenschaften bzgl. Steifigkeit, Festigkeit und Schlagzähigkeit betrifft.

Wärmeabschirmungen bestehen aus vorgeformtem Aluminium, welches aufgeklipst oder über eine spezielle Verbindungsschicht aufgesiegelt wird. Auch das Ansiegeln und Verformen von siegelbarem Aluminium im Werkzeug ist bekannt.

Neuerdings ist auch die Kombination von Schallabsorption und Wärmeisolation in Form von Aluminium-Membranabsorbern und mikroperforierten Aluminiumfolien bekannt.

Weiterhin ist es bekannt, Radhausverkleidungen aus Vlies bzw. Kombinationen aus Vlies und Folien herzustellen. Vliesvarianten besitzen Vorteile bezüglich der Herstellkosten und des Bauteilgewichts verglichen mit spritzgegossenen Radhausverkleidungen. Es hat sich insbesondere gezeigt, dass dieses Vlies akustisch günstig gegen Spritzwasser und Steinschlaggeräusche wirkt.

Neuerdings geht man dazu über, Vlies auch auf der Straßenseite der Unterbodenverkleidungen und Geräuschkapseln anzubringen. Dabei hat sich gezeigt, dass das Geräusch von Motor, Getriebe und Abgasanlage durch diese straßenseitige Kaschierung vermindert wird und zwar sogar dann, wenn der Unterboden schon komplett durch Geräuschkapseln geschlossen ist. Um das Potential voll nutzen zu können, sollte die Vliesdicke deutlich über den derzeit üblichen Vliesdicken von etwa 1 mm liegen.

Der hier beschriebenen Erfindung liegt die Aufgabe zu Grunde, ein Verkleidungsteil für ein Fahrzeug der eingangs genannten Art, insbesondere für die Unterboden-, Geräuschkapsel- oder Radhausverkleidung, zu schaffen, bei dem sowohl die Herstellung vereinfacht und damit verbilligt wird, als auch die funktionellen Eigenschaften beibehalten oder sogar gesteigert werden können.

Diese Aufgabe wird erfindungsgemäß gelöst durch ein Verkleidungsteil der eingangs genannten Art mit den Merkmalen des kennzeichnenden Teils von Anspruch 1.

Bei einem erfindungsgemäßen Verkleidungsteil sind die Eigenschaften für Akustik und Wärmeisolation unter Beibehaltung der Steifigkeits-, Schlagzähigkeits- und E-Modul-Eigenschaften der glasfaserverstärkten Bauteile integriert.

Erfindungsgemäß wird die Trennung der Bauteilkomponenten glasfaserverstärkte Trägerplatte, Schallabsorber, Wärmeisolation, Vlieskaschierung etc. in ihrer funktionalen Anordnung und in deren sukzessiver Herstellung überwunden. Die Eigenschaften werden in einer einzigen Werkstoff- bzw. Schichtenanordnung kombiniert, wobei in einem einzigen Formgebungsprozeß die Herstellung einer Motorraumverkleidung, einer Unterbodenverkleidung, eines Radhauses oder anderer eigensteifer Bauteile aus einem derartigen Werkstoffverbund erfolgt. Dies hat deutliche Kostensenkung gegenüber den meisten bekannten mehrstufigen Herstellverfahren zur Folge. Schließlich ist im Hinblick auf die derzeitige Entwicklung, im Unterbodenbereich immer großflächigere Bauteile zu verwenden, ein Verfahren vorteilhaft, das auch diesbezüglich keiner Kompromisse bedarf und beispielsweise die Herstellung einer kompletten, geschlossenen Unterbodengruppe aus einer einzigen großen Platte ermöglicht.

Ein in vorliegendem Patent beschriebenes Verfahren bietet die Voraussetzungen zur Erstellung von erfindungsgemäßen Verkleidungsteilen.

Grundidee der Erfindung ist es, eine poröse Kernschicht mit akustisch transparenten bzw. absorbierenden Deckschichten derart zu kombinieren, dass sich sowohl die mechanischen Eigenschaften der klassischen Trägerwerkstoffe als auch die akustischen Eigenschaften der klassischen Absorber ergeben. Der Träger wird somit selbst zum Absorber und trägt mit seiner Materialstärke zu der akustisch wirksamen Gesamtdicke des Bauteils bei. Aber auch die akustisch wirksame Fläche wird erhöht, da nun auch Bereiche akustisch wirksam werden, die aus Bauraumgründen bisher ohne zusätzlichen Absorber ausgestattet waren. Der zusätzlich und nachträglich aufgebrachte Absorber ist nicht mehr notwendig.

Das für die Verarbeitung von porösen Materialien notwendige Niederdruck-Pressverfahren führt dazu, dass sämtliche Materialkomponenten in einem Schritt verformt und verbunden werden können.

Der verfahrenstechnische Aspekt liegt insbesondere darin, dass durch den Niederdruckprozess bei der LWRT-Herstellung die akustisch und thermisch wirksamen Schichten zusammen mit dem LWRT-Kern in einem Ein-Stufen-Prozess umgeformt und verbunden werden.

Vorteile gegenüber dem Stand der Technik:
- Kein separates Vorformen und Stanzen des Trägers nötig;
- Kein separates Vorformen und Stanzen von Absorber oder Hitzeschutz-Alu-Folie nötig;
- Kein separates Verbinden von Absorber bzw. Hitzeschutz-Alu-Folie mit dem Träger nötig.

Ein mitverpresstes Vlies behält weitgehend seine Ursprungsdicke und damit seine akustische Leistungsfähigkeit bei.

Ein bauteiltechnischer Aspekt liegt insbesondere darin, dass durch geeignete Auswahl und Formgebung der Abdeckschichten der LWRT-Kernschicht (Glasfaser-PP-Kernschicht) die Kernschicht als akustisch wirksames Luftvolumen mit genutzt wird und damit die akustisch wirksame Gesamtdicke des Bauteils nochmals um die Kernschichtdicke wächst.

Offenporige, poröse Materialien wie Schäume und Vliese sind akustisch absorbierend, wenn deren Strömungswiderstand gewisse Parameter einnimmt. Bei Vliesen erfolgt die Einstellung dieses Strömungswiderstandes üblicherweise durch geeignete Verdichtung der Fasern. Auch das PP-Glasfasergemisch eines LWRT-Kernes lässt sich geeignet verpressen und ermöglicht somit diese akustische Einstellbarkeit, wobei die versteifenden Eigenschaften der gebundenen Glasfaserstruktur erhalten bleiben.

Erfindungsgemäß ist vorgesehen, dass die Abdeckschichten der porösen Glasfaser-PP-Kernschicht eine akustische Transparenz bzw. sogar eigene absorptive Wirksamkeit besitzen. Weiterhin kann die Kernschicht durch geeignete Dimensionierung der Fasern und der Faserdichte in dessen akustischer Wirksamkeit eingestellt und verbessert werden, wobei der Strömungswiderstand der Kernschicht die entscheidende Rolle für die akustische Abstimmung dieser Schicht spielt. Die Dimensionierung des längenbezogenen Strömungswiderstandes Ξ bei gegebenen Schichtdicken und geforderter unterer Grenzfrequenz ist in "Technischer Lärmschutz" von Werner Schirmer (VDI Verlag ISBN 3-540-62128-8) beschrieben. Darin ist empfohlen, dass die optimale Anpassung erfolgt bei Ξₒₚₜd = 800 bis 2400 Ns/m³. Dies ist jedoch nicht zwingend für eine gute akustische Auslegung des Gesamtsystems, da auch über eine gute Auslegung der Deckschichten die Gesamtakustik maßgebend beeinflusst werden kann.

Ein offenporiger poröser Absorber hat bei optimal eingestelltem Strömungswiderstand (Ξₒₚₜd = 800 bis 2400 Ns/m³) mit wachsender Frequenz einen nahezu geradlinigen Anstieg der Schallabsorption von 0 auf 100% um auf dann bei weiterer Frequenzsteigerung oszillierend auf einem Niveau nahe 100% zu verharren. Der Zusammenhang zwischen der Dicke d des porösen Absorbers und der ersten Frequenz des 100% Maximums ist näherungsweise gegeben durch den Zusammenhang f = c*N/(4*d); N: 1,3,5 (c: Ausbreitungsgeschwindigkeit in Luft). Dies folgt aus der Tatsache, dass eine poröser Absorber Absorptionsmaxima besitzt, wo eine Schwingung mit einer 1/4-, einer 3/4-, einer 5/4-Wellenlänge usw. in den Absorber passt oder anders ausgedrückt, wo die Schallschnelle an der Absorberoberfläche einen Schwingungsbauch besitzt.

Jedoch auch geschlossenporige Schäume zeigen akustische Absorptionseigenschaften, wenn die Poren eine gewisse Größe erreichen und die Zellwände elastisch sind. In diesem nicht erfindungsgemäßen Fall verhält sich der Kern akustisch als Hintereinanderschaltung von kleinen Membranen. Auch lässt sich geschlossenzelliger Schaum durch Nadeln anperforieren bzw. durchperforieren, was zu einer weiteren Steigerung der Scballabsorptionseigenschaft beiträgt. Sinnvolle Materialstärken für die Kernschicht liegen zwischen 1 mm und 20 mm und insbesondere zwischen 1,5 mm und 10 mm, unabhängig davon, ob als Kernschicht ein Vlies oder ein Schaumstoff verwendet wird.

Die akustische Transparenz der Deckschichten erreicht man einerseits durch Perforieren. Im Falle von Lochflächenverhältnissen > 30 % erhält man weitgehende Transparenz. Bei Lochflächenverhältnissen unter 10% erhält die Folie eigene Dämpfungseigenschaften und somit Absorptionseigenschaften, wenn die Lochgrößen dabei zwischen 0,01 und 1mm, bevorzugt zwischen 0,05 und 0,2mm, liegen.

Verwendet man andererseits als Abdeckschicht ein Vlies, so lässt sich über dessen längenbezogenen Strömungswiderstand Ξ ebenfalls die Transparenz bzw. absorptive Eigenschaft einstellen.

Schließlich lässt sich akustische Transparenz auch durch eine dünne Folie realisieren, wobei diese nicht starr in das Kerngerüst eingebunden sein darf. Ein Lösungsweg ist, Schaumfolie zu verwenden, wie sie auch bei den gängigen Kammerabsorbern Verwendung findet oder andererseits durch Ausbildung von Kammern im Formgebungsprozess (über Vakuumtiefziehen oder Formblasen) nur partiell die Abdeckfolie an den Kern anzubinden. Im Fall der Schaumfolie können handelsübliche PP-Schäume eingesetzt werden, wie bspw. das Alveolen NPFRG 2905,5 von Alveo oder das Procell-P 150-2,5 SF40 von Polymer-Tec, im Falle der Kompaktfolien eignen sich gängige Folien von 0,1 - 0,8 mm, wenn durch Kammerbildung der Verbund zum Kern unterbrochen ist oder Folien < 100 µm, wenn sich die Folie in direktem Verbund mit dem Kernmaterial befindet. Im Falle der Abdeckung mit Folien oder Schäumen ergibt sich ein Resonanzabsorber, dessen Resonanzfrequenz sich aus der gedämpften Luftsteifigkeit und der Masse der Abdeckschicht näherungsweise errechnet mit fres = 1/2PI* (Flächensteifigkeit/Flächenmasse)^{½} mit Flächensteifigkeit = rho*c²/d (mit rho = Luftdichte; c = Schallgeschwindigkeit; d = Dicke der Schicht). Auch hier sieht man, dass die Dicke der Luftschicht entscheidend für die untere Grenzfrequenz ist.

Die Materialstärke der Abdeckschichten sollte bei Kompakt-Folien zwischen 20 µm und 500 µm und insbesondere zwischen 20 µm und 100 µm, bei Schaumfolien zwischen 1 mm und 8 mm und insbesondere zwischen 2 mm und 6 mm, und bei Vliesen zwischen 0,5 mm und 5 mm und insbesondere zwischen 1 mm und 3 mm liegen.

Für zumindest eine Abdeckschicht wird erfindungsgemäß ein mit Glasfasern verstärktes Faservlies verwendet, das vorzugsweise aus 60 Gew.% bis 80 Gew.% thermoplastischen Kunststofffasern, beispielsweise PP-Fasern, und aus 20 Gew.% bis 40 Gew.% Glasfasern besteht. In bevorzugter Ausgestaltung ist vorgesehen, das Vlies der Abdeckschicht mit einem Flächengewicht von 400 g/m² bis 500 g/m² aus etwa 75 Gew.% PP-Fasern und 25 Gew.% Glasfasern aufzubauen.

Um zu vermeiden, dass die Glasfasern außenseitig hervorstehen, kann auf der Abdeckschicht bzw. den Abdeckschichten eine weitere dünne PET-Faser-Vliesabdeckung mit einem Flächengewicht von 15 g/m² bis 50 g/m² angeordnet sein.

Als Kernschicht hat sich in diesem Zusammenhang ein Faservlies mit ca. 60 Gew.% PP-Fasern und ca. 40 Gew.% Glasfasern bewährt, das ein Flächengewicht von 400 g/m² bis 1200 g/m² und insbesondere von 500 g/m² bis 700 g/m² aufweist.

Die Herstellung eines Bauteils erfolgt vorzugsweise dadurch, dass das Halbzeug, welches aus einer oder mehreren Schichten von Folien und mehreren Vliesen bestehen kann, in einer Kontakt- oder Strahlerheizung aufgeheizt wird und danach in einem abkühlenden Werkzeug verpresst wird. Schichten, die dem Aufheizprozess nicht unterworfen werden sollen, wie beispielsweise die Abdeckvliese oder die Alufolie bei Strahlerheizung, werden direkt in das Werkzeug gebracht und zusammen mit dem aufgeheizten Kernmaterial verpresst. Auch ist es denkbar, sämtliche Schichten separat zuzuführen und geeignet vorgeheizt erst im Werkzeug zu verbinden. Somit spart man sich die Erstellung eines Halbzeugs, was wiederum eine Kostenersparnis zur Folge hat.

In einer bevorzugten Ausführung der Erfindung wird beispielsweise ein LWRT-Halbzeug, das aus einem versteifenden Glasfaser-PP-Kernvlies besteht und mit zwei stabilisierenden Folien abgedeckt ist, so modifiziert, dass einerseits das Glasfaser-PP-Kernvlies in seiner Struktur akustisches Potential entfaltet, andererseits auch die Deckschichten Funktionalität erhalten, die über die reine Abdeck- und Versteifungsfunktion hinausgehen.

Bei einer derartigen Unterbodenverkleidung aus einer porösen Kernschicht und mindestens einer Deckschicht auf jeder Seite kann die Abdeckfolie beispielsweise überall oder in Teilbereichen membranartig schwingfähig sein, wobei die membranartige Schwingfähigkeit der Abdeckfolie durch Materialauswahl einer besonders biegeweichen Folie erzielt werden kann. Kunststofffolien aus PP, PET, PA, PU usw. mit einer Dicke < 100 µm sind in diesem Sinne grundsätzlich biegeweich, ohne dass besondere weichmachende Zusatzstoffe notwendig sind.

Bei einem eigenstabilen, akustisch absorbierenden Bauteil bzw. Formteil kann die membranartige Schwingfähigkeit dadurch erreicht werden, dass die Anbindung an das Kernmaterial in Teilflächen unterbrochen ist. Dies kann beispielsweise dadurch erfolgen, dass die Folie bzw. Schaumfolie vor dem Zusammenfahren der Werkzeughälften mit Vakuum in Kammerkavitäten des Werkzeugs gezogen wird bzw. durch Vakuum oder Druckluft nach dem Zusammenfahren wieder von der Kernschicht weggedrückt wird.

Bei dem Verfahren zur Herstellung einer eigenstabilen, akustisch absorbierenden Unterbodenverkleidung ist vorgesehen, dass wenigstens eine der abdeckenden Schichten aus hochschmelzenden und niedrigschmelzenden Fasern besteht und damit die Faserstruktur der hochschmelzenden Fasern trotz Aufheizen erhalten bleibt, während die niedrigschmelzenden Fasern als Bindefasern dienen.

Bei dem Verfahren zur Herstellung einer eigenstabilen, akustisch absorbierenden Unterbodenverkleidung kann vorgesehen sein, dass als abdeckende Schicht eine hochschmelzende Folie, z.B. eine Aluminiumfolie, mit kernmaterialseitiger niedrigschmelzender Thermoplastschicht oder Haftvermittlerschicht ins Werkzeug gebracht wird und zusammen mit dem aufgeheizten Kernmaterial verformt wird und dabei die Aktivierung der Klebeschicht erfolgt, was schließlich zu einem Verbund zwischen Kernmaterial und der hochschmelzenden Folie führt.

Statt Aluminium können auch hochmelzende Kunststofffolien aus PA, PET und PUR verwendet werden. Beispiele sind: Polyamidfolie 20-50µm, Polyesterfolie 20-50µm, Polyurethanfolie 20-50µm jeweils mit einer dünnen einseitigen oder beidseitigen Kleber- oder Thermoplastschicht beispielsweise aus Polypropylen, welche als niedrigschmelzende Verbindungsschicht dienen kann. Das Polypropylen schmilzt, während die eigentliche Abdeckfolie das Aufheizen oder Aufsiegeln ohne Schmelzen übersteht. Dies ist insbesondere vorteilhaft beim Einsatz von mikroperforierten Folien, da die Löcher beim Aufheizen erfahrungsgemäß ihre Größe verändern.

Generell gilt, dass die Abdeckschichten sowohl aus hoch- und niedrigschmelzenden Fasergemischen als auch aus hoch- und niedrigschmelzenden Folienkombinationen bestehen können, wobei bei den Folien die niedrigschmelzenden Schichten auch auf beiden Seiten angebracht sein können, wenn eine weitere äußere Schicht mit angepresst werden soll.

Es kann vorgesehen sein, dass die abdeckenden Schichten nur in den Bereichen des Bauteils partiell aufgebracht werden, wo sie aus funktionellen Gründen benötigt werden. Das partielle Aufbringen der abdeckenden Schichten kann dabei dadurch erfolgen, dass die abdeckenden Schichten nur in Teilbereichen mit dem Kernmaterial verbunden werden. In einer möglichen Ausgestaltung ist dabei vorgesehen, dass die abdeckende Folie durch partielles Erhitzen, partielles Ultraschallschweißen, partielles Hochfrequenzschweißen oder partielles Reibschweißen nur in Teilbereichen mit dem Kernmaterial verbunden wird. Alternativ ist es möglich, dass die abdeckende Folie, die eine hochschmelzende Schicht und eine kernseitige niederschmelzende Schicht aufweist, auf eine Temperatur erwärmt wird, die nur die niederschmelzende Schicht zum Schmelzen bringt, und anschließend von der dem Kernmaterial abgewandten Seite an den Kern angedrückt und dadurch partiell an diesem angebunden wird. Die niederschmelzende Schicht kann sich dabei über die gesamte hochschmelzende Schicht erstrecken, es ist jedoch auch möglich, dass die kernseitige, niederschmelzende Schicht nur in Teilbereichen der hochschmelzenden Schicht angeordnet ist.

Bei einer nicht erfindungsgemäßen eigenstabilen, akustisch absorbierenden Unterbodenverkleidung kann das Kernmaterial aus PP-Schaumfolie oder aus PUR-Schaumstoff bestehen. PP-Schaum ist üblicherweise geschlossenzellig, könnte aber durch Perforieren oder Einbringen von Ausstanzungen derart modifiziert werden, dass ebenfalls eine vergleichbare Wirkung zu den Faserkernschichten entsteht. Die Perforationsparameter sollten ähnlich zu den mikroperforierten Deckschichten derart gewählt werden, dass der Lochdurchmesser bzw. die Schlitzweite zwischen 0,01mm und 1mm, bevorzugt zwischen 0,05mm und 0,2mm, und das Verhältnis von Lochfläche zur Gesamtfläche im Bereich von 0,1% und 10%, bevorzugt zwischen 3% und 8% liegt. Überraschenderweise hat sich gezeigt, dass auch bei einem nur oberflächlichen Einstechen, d.h. ohne Durchstoßen der Schicht, eine erhebliche akustische Wirksamkeit entsteht. Die Ausstanzungen und die dazwischenliegenden Stege sollten sich im Bereich von 5 bis 50mm bewegen mit runder, quadratischer oder wabenförmiger Geometrie. Ein weiterer Vorteil ist eine Gewichtsverminderung.

In den beigefügten Abbildungen sind Ausbildungsformen eines Verkleidungsteils beschrieben, die jeweils einen Teil der Merkmale eines erfindungsgemäßen Verkleidungsteils zeigen. Keine Ausbildungsform zeigt jedoch alle Merkmale des Verkleidungsteils des Anspruchs 1. Es zeigen:
- Fig. 1a, 1b, 1c: bekannte Aufbauten eines Verkleidungsteils,
- Fig. 2a, 2b, 2c: nicht erfindungsgemäße Aufbauten eines Verkleidungsteils,
- Fig. 3a, 3b, 3e: weitere nicht erfindungsgemäße Ausgestaltungen eines Verkleidungsteils,
- Fig. 3c, 3d, 3f: nicht erfindungsgemäße Ausgestaltungen eines Verkleidungsteils und
- Fig. 4: eine schematische Darstellung des Verfahrens zur Herstellung eines Verkleidungsteils.

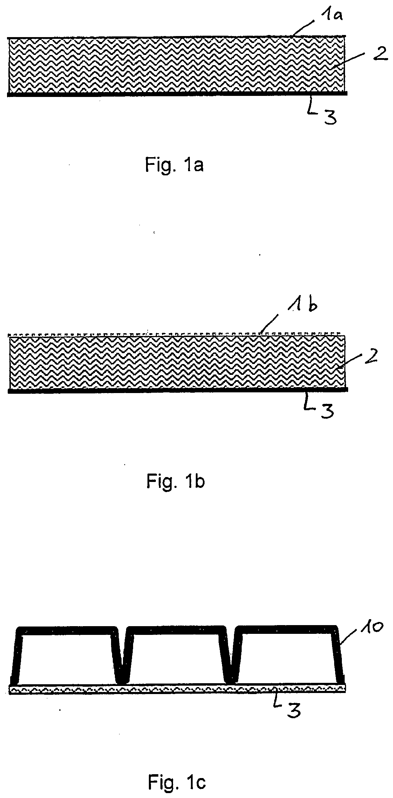

Die Figuren 1a, 1b und 1c zeigen verschiedene bekannte, derzeit im Einsatz befindliche Geräuschkapselsysteme aus einer Verkleidungsplatte aus bspw. GMT, D-LFT oder LWRT und zusätzlich aufgebrachten Schallabsorbern.

In Figur 1a ist schematisch ein poröser Absorber 2 aus beispielsweise einen Polyestervlies oder einen PUR-Schaum dargestellt, der mit einer dünnen PUR- oder Polyesterfolie la gegen flüssige Medien abgedeckt ist und auf einen Träger 3 aus beispielsweise GMT aufgebracht ist.

In Figur 1b ist schematisch ein poröser Absorber 2 aus beispielsweise Basaltsteinwolle dargestellt, der mit einer mikroperforierten Aluminiumfolie 1b abgedeckt ist und auf einen Träger 3 aus beispielsweise SMC aufgebracht ist.

In Figur 1c ist schematisch ein Kammerabsorber 10 aus PP-Schaum dargestellt, der auf einen Träger 3 aus beispielsweise LWRT aufgebracht ist.

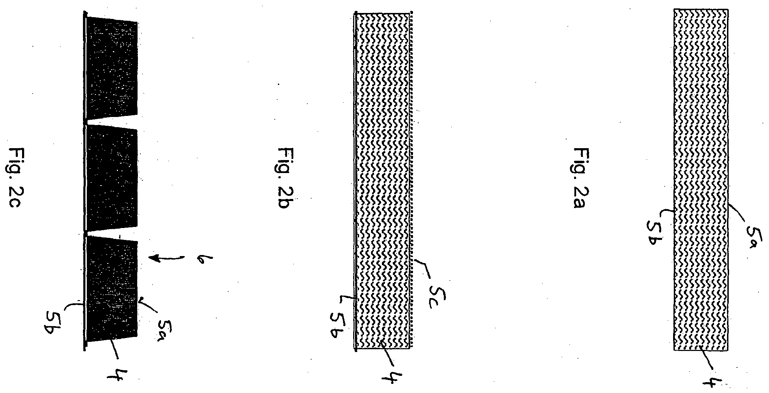

Die Figuren 2a, 2b und 2c zeigen in Analogie zu den Figuren 1a, 1b und 1c nicht erfindungsgemäße Ausführungsformen, in welchen die Funktionalität der Akustik in den LWRT-Kern übertragen wurde.

In Figur 2a ist eine akustisch wirksame Glasfaser-PP-Kernschicht 4 zwischen zwei Abdeckschichten 5a und 5b aus Folie eingeschlossen. Die Kernschicht 4 mit einem Flächengewicht von 1200g/m² hat eine Dicke von 5mm und setzt sich zusammen aus 40 Gewichtsprozent Glasfaser mit 15-20µm Faserdurchmesser und 60 Gewichtsprozent PP, welches aufgeschmolzen ist und die Glasfasern bindet. Die Folien besitzen mehr oder weniger ausgeprägte akustische Funktion je nach Biegeeigenschaften und Anbindung an den Glasfaser-PP-Kern 4.

In Figur 2b ist die akustisch wirksame Glasfaser-PP-Kernschicht 4 auf der oberen Seite mit einer 100µm dicken mikroperforierten Folie beispielsweise aus Aluminium 5c abgedeckt. Diese ist akustisch absorbierend eingestellt mit beispielsweise einem Lochdurchmesser von 100µm und einem Lochabstand von 500µm. Der Werkstoff Aluminium erlaubt es, dieses Verkleidungsteil auch in unmittelbarer Nähe des Abgasstrangs des Fahrzeugs anzubringen und ermöglicht somit auch einen geschlossenen Unterboden.

In Figur 2c ist der Gesamtaufbau aus den Abdeckfolien 5a und 5b und der Glasfaser-PP-Kernschicht 4 in eine Kammerstruktur 6 verformt. Die Kammerseitenflächen bilden ein Quadrat mit Seitenlängen von 10 bis 100mm und die Höhe der Kammer liegt im Bereich von 5 bis 30mm, wobei das Verhältnis Seitenlänge zu Höhe etwa 1 bis 2 betragen sollte. Die Kammern erweitern die akustische Abstimmbarkeit des Bauteils über die Kammergeometrie (Resonatoreffekt) und ermöglichen darüber hinaus eine zusätzliche Ver- oder Entsteifung des Gesamtbauteils, je nach Geometrie und Anordnung der Kammern.

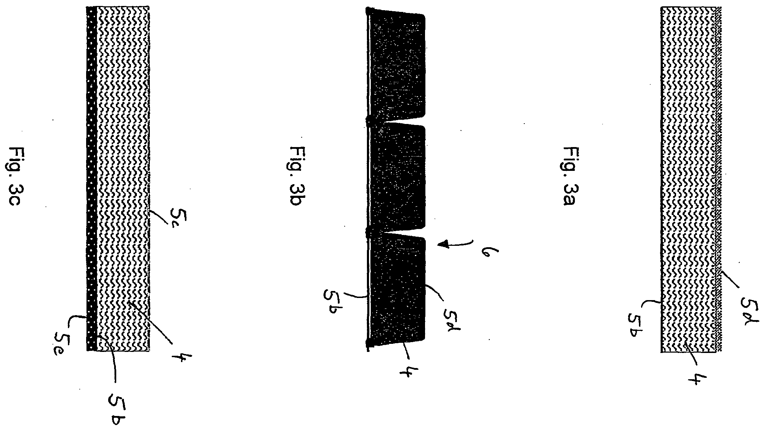

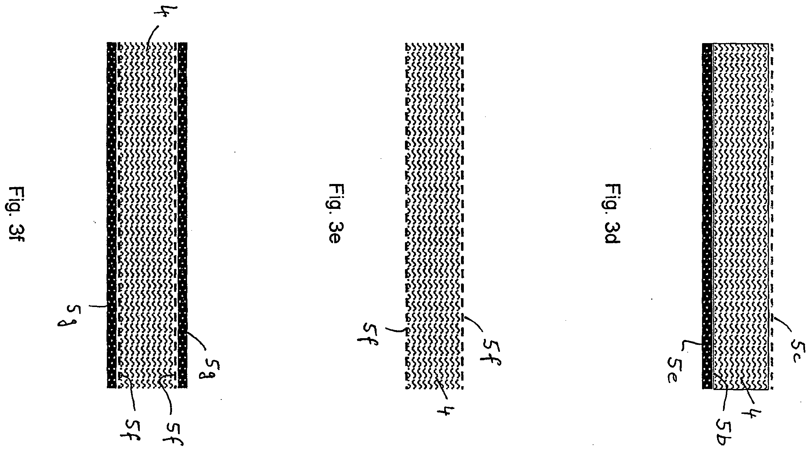

Weitere nicht erfindungsgemäße Ausbildungsformen sind in den Figuren 3a, 3b und 3e dargestellt. Nicht erfindungsgemäße Ausführungsformen sind auch in den Figuren 3c, 3d und 3f dargestellt.

In Figur 3a ist die LWRT-Kernschicht 4 mit einer Schaumfolie 5d wie bspw. das Alveolen NPFRG 2905,5 von Alveo öder das Procell-P 150-2,5 SF40 von Polymer-Tec abgedeckt.

Figur 3b zeigt den gleichen Materialaufbau, wobei hier zusätzliche Kammern 6 in das Bauteil eingebracht sind.

In Figur 3c ist die Unterseite des Bauteils mit einer Folie 5b und einem 2mm dicken akustisch wirksamen PP-Vlies 5e mit einem Flächengewicht von 500g/m² abgedeckt. Die Oberseite 5a besitzt eine Abdeckung aus Aluminiumfolie 5c für die Wärmeabschirmung gegen die Temperaturen des Abgasstrangs.

In Figur 3d ist die Unterseite des Bauteils ebenfalls mit einer Folie 5b und einem akustisch wirksamen Vlies 5e abgedeckt. Die 0,05mm dicke Aluminiumfolie 5c der Oberseite ist mikroperforiert mit Lochdurchmesser von 0,2mm und einem Lochabstand von 1,5mm, was die akustische Wirksamkeit des Bauteils nochmals deutlich steigert.

In Figur 3e ist die Oberseite und die Unterseite des Bauteils mit einer mikroperforierten Folie 5f abgedeckt. Figur 3f sind die Oberseite und die Unterseite des Bauteils mit einer 0,05mm dicken mikroperforierten Folie 5f mit einem Lochdurchmesser von 0,2mm und einem Lochabstand von 1,5mm abgedeckt und diese jeweils nochmals mit einem akustisch wirksamen Vlies 5g bedeckt. Diese Ausführungsform hat den Vorteil, dass die Vliese 5f hochfrequent wirken und die Kernschicht zusammen mit den mikroperforierten Abdeckungen mittel- und tieffrequent abgestimmt werden kann. Bei geeigneter oleo- und hydrophober Ausrüstung der Vliese bewirken diese, dass z. B. Spritzwasser nicht in die Perforation und damit in das Kernmaterial eindringen kann.

Es sind natürlich noch weitere Ausführungsformen denkbar und sinnvoll, je nach Anforderungen an die akustische und thermische Funktion des Bauteils. Insbesondere ist es auch sinnvoll, einzelne Abdeckschichten bzw. deren Strukturierung in Kammern etc. nur partiell vorzunehmen.

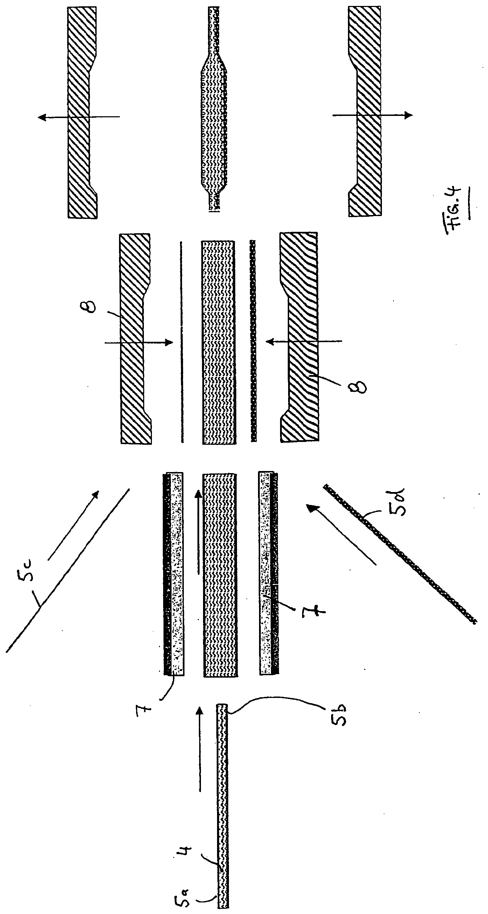

Figur 4 zeigt das Herstellverfahren, wobei die Kernschicht 4 mit eventuellen Abdeckfolien 5a, 5b in einer Strahlerheizung oder Kontaktheizung 7 aufgeheizt werden und dabei die Kernschicht zum Loften gebracht wird. Dieses geloftete Material wird anschließend mit weiteren nicht vorgeheizten Abdeckschichten 5c und 5d in ein Presswerkzeug 8 gebracht und verpresst.

Letztendlich ist es anzustreben, möglichst großflächige Bauteile zu schaffen, da einerseits die Absorption mit der Fläche proportional zunimmt, andererseits durch diese Großflächigkeit der Verschlussgrad der Unterbodens zunimmt und damit zusätzlich der Schallaustritt verhindert wird. Beide Effekte führen zu einer überproportionalen Verbesserung des Außengeräuschs. Derartige Unterbodenverkleidungen sind mit dem beschriebenen Bauteilkonzept und dem einhergehenden Herstellverfahren wirtschaftlich herstellbar, womit sich neuartige Möglichkeiten in der akustischen und aerodynamischen Gestaltung von Fahrzeugen ergeben.

## Patentansprüche

1. Verkleidungsteil für ein Fahrzeug, insbesondere Unterbodenverkleidung, aus einer porösen Kernschicht (4) und mindestens einer Deckschicht (5a, 5b, 5c, 5d, 5e, 5f) auf jeder Seite, wobei die poröse Kernschicht (4) aus einer niedrigschmelzenden, thermoplastischen Kunststoffmatrix mit eingelagerten hochschmelzenden Verstärkungsfasern, insbesondere Glasfasern, besteht, deren Schmelztemperatur höher als die Schmelztemperatur der Kunststoffmatrix ist und wobei zumindest eine der Deckschichten aus einem Abdeckvlies besteht,
**dadurch gekennzeichnet, dass** das Abdeckvlies steifigkeitsbildende Eigenschaft besitzt, wobei die steifigkeitsbildende Eigenschaft über einen Glasfaseranteil erzielt wird und wobei das Abdeckvlies aus hochschmelzenden und niedrigschmelzenden Fasern besteht, wobei die Faserstruktur der hochschmelzenden Fasern trotz Aufheizen erhalten bleibt, während die niedrigschmelzenden Fasern als Bindefasern dienen, wobei das Verkleidungsteil in seinen mechanischen, dynamischen und akustischen Eigenschaften durch partiell unterschiedlich dickes Verprägen bestimmt ist.

2. Verkleidungsteil nach Anspruch 1,
**dadurch gekennzeichnet, dass** wenigstens eine der Deckschichten aus Folie besteht.

3. Verkleidungsteil nach Anspruch 1 oder 2,
**dadurch gekennzeichnet, dass** die Deckschicht aus Folie von Kompakt-Folie gebildet ist, deren Stärke zwischen 20 µm und 500 µm und insbesondere zwischen 20 µm und 100 µm liegt.

4. Verkleidungsteil nach Anspruch 2,
**dadurch gekennzeichnet, dass** die Deckschicht aus Folie von Schaumfolie gebildet ist, deren Stärke zwischen 1mm und 8mm und insbesondere zwischen 2mm und 6mm liegt

5. Verkleidungsteil nach einem der vorhergehenden Ansprüche,
**dadurch gekennzeichnet, dass** die Stärke des Abdeckvlieses zwischen 0,5 mm und 5 mm und insbesondere zwischen 1 mm und 3 mm liegt.

6. Verkleidungsteil nach einem der vorhergehenden Ansprüche,
**dadurch gekennzeichnet, dass** das Abdeckvlies oleophobe und hydrophobe Eigenschaft besitzt.

7. Verkleidungsteil nach Anspruch 2, insbesondere in Kombination mit wenigstens einem der Ansprüche 3 bis 6,
**dadurch gekennzeichnet, dass** die Deckschicht aus Folie mikroperforiert ist.

8. Verkleidungsteil nach Anspruch 7,
**dadurch gekennzeichnet, dass** die Mikroperforation der Deckschicht aus Folie Lochdurchmesser bzw. Schlitzweiten (im Gegensatz zu Schlitzlängen) von 0,001mm bis 1mm, insbesondere von 0,05 bis 0,2mm, sowie Lochanteile (Verhältnis der Loch- bzw. Schlitzfläche zu der Gesamtfläche) von 0,1 bis 10%, insbesondere von 3 bis 8% besitzt.

9. Verkleidungsteil nach Anspruch 1,
**dadurch gekennzeichnet, dass** die Kernschicht aus einem Glasfaser-Kunststoff-Vlies besteht.

10. Verkleidungsteil nach Anspruch 9,
**dadurch gekennzeichnet, dass** die Kunststoffmatrix des Vlieses aus Polypropylen besteht.

11. Verkleidungsteil nach Anspruch 9 oder 10,
**dadurch gekennzeichnet, dass** die Kunststoffmatrix des Vlieses aus Polypropylenfasern besteht.

12. Verkleidungsteil nach Anspruch 1,
**dadurch gekennzeichnet, dass** die Kernschicht eine Stärke von 0,5mm bis 20 mm und insbesondere von 1,0 mm bis 10 mm und insbesondere von 1,5 mm bis 7,0 mm aufweist.

## Claims

1. Cover part for a vehicle, in particular an underbody shield comprising a porous core layer (4) and at least one cover layer (5a, 5b, 5c, 5d, 5e, 5f) on each side, wherein the porous core layer (4) consists of a low-melting thermoplastic plastic matrix with embedded high-melting reinforcing fibres, in particular glass fibres whose melting point temperature is higher than the melting point temperature of the plastic matrix, and wherein at least one of the cover layers consists of a covering nonwoven fabric,
**characterized in that** said covering nonwoven fabric has a stiffness-forming property, wherein said stiffness-forming property is obtained by a glass fibre component and wherein the covering nonwoven fabric consists of high-melting and low-melting fibres, wherein the fibre structure of the high-melting fibres remains the same when heating, while the low-melting fibres act as bonding fibres, in which the cover part has mechanical, dynamic and acoustic properties which are determined by embossing with partly different depths.

2. The cover part according to claim 1,
**characterized in that** at least one of the cover layers consists of film material.

3. The cover part according to claim 1 or 2,
**characterized in that** the cover layer made of a film material is formed by a compact film with a thickness of between 20 µm and 500 µm and in particular between 20 µm and 100 µm.

4. The cover part according to claim 2,
**characterized in that** the cover layer made of a film material is formed by a foam film with a thickness of between 1 mm and 8 mm and in particular between 2 mm and 6 mm.

5. The cover part according to one of the preceding claims,
**characterized in that** the covering nonwoven fabric has a thickness of between 0.5 mm and 5 mm and in particular between 1 mm and 3 mm.

6. The cover part according to one of the preceding claims,
**characterized in that** the covering nonwoven fabric has oleophobic and hydrophobic properties.

7. The cover part according to claim 2, in particular in combination with at least one of claims 3 to 6,
**characterized in that** the cover layer made of film material is microperforated.

8. The cover part according to claim 7,
**characterized in that** the micro-perforation of the cover layer made of film material has hole diameters or slit widths (as opposed to slit lengths) of 0.001 mm to 1 mm, in particular of 0.05 to 0.2 mm as well as hole percentages (relation of the hole area or slit area to the total area) of 0.1 to 10%, in particular 3 to 8%.

9. The cover part according to one claim 1,
**characterized in that** the core layer is made of a glass fibre-plastic-nonwoven fabric.

10. The cover part according to one claim 9,
**characterized in that** the plastic matrix of the nonwoven fabric is formed from polypropylene.

11. The cover part according to claim 9 or 10,
**characterized in that** the plastic matrix of the nonwoven fabric is formed from polypropylene fibres.

12. The cover part according to one claim 1,
**characterized in that** the core layer has a thickness of 0.5 mm to 20 mm and in particular of 1.0 mm to 10 mm and in particular of 1.5 mm to 7.0 mm.

## Revendications

1. Pièce d'habillage pour un véhicule, en particulier un revêtement de bas, comprenant une couche de cœur poreuse (4) et au moins une couche de revêtement (5a, 5b, 5c, 5d, 5e, 5f) sur chaque côté, la couche de cœur poreuse (4) étant constituée d'une matrice en matière plastique thermoplastique à bas point de fusion avec des fibres de renforcement à haut point de fusion noyées, en particulier des fibres de verre, dont la température de fusion est plus élevée que la température de fusion de la matrice en matière plastique et au moins une desdites couches supérieures étant constituée d'un non-tissé de revêtement,
**caractérisée par** le non-tissé de revêtement ayant un caractéristique formant de la rigidité, ledit caractéristique formant de la rigidité étant obtenu par une proportion de fibres de verre et le non-tissé de revêtement étant constitué de fibres à haut point de fusion et de fibres à bas point de fusion, la structure des fibres à haut point de fusion étant maintenue malgré l'échauffement tandis que les fibres à bas point de fusion servent de fibres de liaison, les caractéristiques mécaniques, dynamiques et acoustiques de la pièce d'habillage étant déterminés par un formage d'une épaisseur partiellement différente.

2. Pièce d'habillage selon la revendication 1,
**caractérisée par** au moins une des couches de revêtement étant composée par un film.

3. Pièce d'habillage selon la revendication 1 ou 2,
**caractérisée par** la couche de revêtement composée d'un film étant formée par du film compact avec une épaisseur entre 20 µm et 500 µm et en particulier entre 20 µm et 100 µm.

4. Pièce d'habillage selon la revendication 2,
**caractérisée par** la couche de revêtement composée d'un film étant formée par du film en mousse avec une épaisseur entre 1 mm et 8 mm et en particulier entre 2 mm et 6 mm.

5. Pièce d'habillage selon une des revendications précédentes,
**caractérisée par** l'épaisseur du non-tissé de revêtement étant entre 0,5 mm et 5 mm et en particulier entre 1 mm et 3 mm.

6. Pièce d'habillage selon une des revendications précédentes,
**caractérisée par** le non-tissé de revêtement ayant des caractéristiques oléophobes et hydrophobes.

7. Pièce d'habillage selon la revendication 2, en particulier en combinaison avec au moins une des revendications 3 à 6,
**caractérisée par** la couche de revêtement composée de film étant microperforée.

8. Pièce d'habillage selon la revendication 7,
**caractérisée par** la microperforation de la couche de revêtement composée de film comprenant des diamètres de trou ou des largeurs de fente (opposés aux longueurs de fente) de 0,001 mm à 1 mm, en particulier de 0,05 à 0,2 mm, ainsi que des parties de trou (rapport entre la surface du trou ou de la fente et la surface totale) de 0,1 à 10%, en particulier de 3 à 8%.

9. Pièce d'habillage selon la revendication 1,
**caractérisée par** la couche de cœur étant composée d'un non-tissé en plastique et en fibres de verre.

10. Pièce d'habillage selon la revendication 9,
**caractérisée par** la matrice en matière plastique du non-tissé étant composée de polypropylène.

11. Pièce d'habillage selon la revendication 9 ou 10,
**caractérisée par** la matrice en matière plastique du non-tissé étant composée de fibres en polypropylène.

12. Pièce d'habillage selon la revendication 1,
**caractérisée par** la couche de cœur possédant une épaisseur de 0,5 mm à 20 mm et en particulier de 1,0 mm à 10 mm et en particulier de 1,5 mm à 7,0 mm.
